# EUROPEAN PATENT SPECIFICATION

(11) **EP 1 582 752 B1**
(45) Date of publication and mention of the grant of the patent: **16.05.2007**
(21) Application number: 04101280.8
(22) Date of filing: 29.03.2004
(51) Int. Cl.: F16B 7/20

(54) **Locking mechanism and open roof construction provided therewith**
Verriegelungsmechanismus und ein damit ausgerüstetes Schiebedach
Dispositif de verrouillage et un toit coulissant équipé avec cela

(43) Date of publication of application: 05.10.2005
(73) Proprietor: Inalfa Roof Systems Group B.V., 5804 AH Venray (NL)
(72) Inventor: Feijts, Pascal, Jozef, Maria, 6042 JD, Roermond (NL)
(74) Representative: Voncken, Bartholomeus Maria Ch.

(56) References cited:
- US-A- 2 794 961
- US-A- 3 466 715

## Description

The invention firstly relates to a locking mechanism according to the preamble of claim 1.

For locking together two parts numerous locking mechanisms are known in the state of the art. Many of these known locking mechanisms comprise a number of parts hingeably connected to each other. In many cases the hinges are subjected to large loads, making the locking mechanism vulnerable. Moreover, for withstanding those large loads, many of the known locking mechanisms have large dimensions, thus leading to locking mechanisms which are bulky and require much room.

Document US-A-2.794.961 shows a locking mechanism according to the preamble of claim 1. Its cylindrically shaped locking pin is manipulated manually between its release and locking positions.

It is an object of the present invention to provide an improved locking mechanism of the type referred to above.

Thus, in accordance with the present invention a locking mechanism for locking together two parts is provided, comprising a first movable locking member connected to a first one of said parts and a second locking member connected to a second one of said parts, wherein the first locking member is movable between a release position in which it disengages the second locking member and a locking position in which it lockingly engages the second locking member, wherein the first locking member comprises an elongate, substantially cylindrically shaped locking pin which can translate in its longitudinal direction and which can rotate around its longitudinal axis, characterized in that said locking pin is housed in a tubular guide member for defining the translational and rotational movements of the locking pin, and wherein the locking pin is operatively connected to a drive member for in combination with the guide member causing the movements of the locking pin relative to the guide member and thus relative to the second locking member.

The locking mechanism according to the present invention does not contain any parts which are hingeably connected to each other. The locking pin only translates in its longitudinal direction and rotates around its longitudinal axis, thus limiting the dimensions of the locking mechanism. The absence of hinges makes the locking mechanisms less complicated than existing locking mechanisms, leading to an extremely reliable locking mechanism. The combination of translational and rotational movements of the locking pin caused by the drive member and guide member leads to the desired engagement and disengagement between the first locking member and the second locking member.

In a preferred embodiment of the locking mechanisms according to the present invention, the guide member comprises at least one guide channel with a first longitudinal section and a connecting transverse section, whereas the locking pin comprises a corresponding guide projection projecting into said guide channel.

As long as the guide projection of the locking pin is received in the first longitudinal section of the guide channel, the locking pin only will translate. As soon as the guide projection has reached the transverse section of the guide channel, the locking pin will rotate.

When the guide member comprises two guide channels positioned one diametrically opposite the other, whereas the locking pin correspondingly comprises two guide projections positioned one diametrically opposite the other, not only an improved cooperation between the locking pin and the guide member is realised, but it also will be ensured that symmetrical loads are applied to the locking pin, thus preventing tilting and a resulting extreme friction and wear.

In a preferred embodiment of the locking mechanism according to the present invention, the drive member comprises a drive pin movable in the longitudinal direction of the locking pin, with at least one drive projection that engages the locking pin. Moving the drive pin in the longitudinal direction (for example by means of a cable drive) the locking pin is correspondingly moved.

When, in accordance with another aspect of the present invention, the locking pin comprises a longitudinally extending bore for at least partially housing the drive member, the entire locking mechanism is extremely compact with small outer dimensions.

The cooperation between the drive member and the locking pin can be optimised, when the locking pin comprises at least one spiral shaped channel into which the drive projection of the drive pin extends and wherein means are provided for preventing a rotation of the drive pin relative to the guide member.

Because of the provision of the means preventing a rotation of the drive pin relative to the guide member, the drive projection of the drive member only will move in a longitudinal direction. During such a movement it will move the locking pin in that longitudinal direction too, as long as the guide projection of the locking pin is received in the longitudinal section of the guide channel of the guide member. During this stage of the movement, the drive projection of the drive member assumes a stationary position in the spiral shaped channel of the locking pin. When the guide projection of the locking pin has reached the transverse section of the guide channel, the longitudinal movement of the locking pin is stopped, and a rotational movement starts. This rotational movement is supported by the drive projection of the drive member being displaced along the spiral shaped channel of the locking pin, thus creating a rotational force transversally to the longitudinal direction, leading to a rotation of the locking pin. As a result, the locking pin ultimately will reach its locking position. In an opposite sense, the locking pin will firstly rotate, and then will translate, for ultimately reaching its release position (it is noted that, when the guide projection has reached the transverse section of the guide channel, depending on the slope of said transverse section the locking pin also may experience a translational and rotational movement simultanuously).

In an embodiment of the locking mechanism according to the present invention as stated above, it further is preferred, that the means for preventing a rotation of the drive pin relative to the guide member comprises a longitudinally extending auxiliary channel provided in the guide member into which said drive projection of the drive pin extends.

This embodiment combines the function of driving the locking pin and the function of preventing a rotation of the drive pin in one and the same member, i.e. the drive projection of the drive pin.

Also in this case, for reasons of symmetry and for optimising the load applied onto the mechanism, it is possible that the locking pin comprises two spiral shaped channels, the drive pin comprises two drive pins and the guide member comprises two auxiliary channels, each positioned one diametrically opposite the other.

Although the locking pin of the locking mechanism according to the present invention may have many different shapes for enabling its cooperation with the second locking member, preferably the locking pin is provided with at least one locking nose for cooperation with a locking recess of the second locking member. As an example, said locking nose and locking recess together define a locking assembly of the bayonet type.

Again, for obtaining a symmetrical construction having symmetrical loads applied thereto, preferably the locking pin comprises two locking noses and the second locking member comprises two locking recesses, each positioned one diametrically opposite the other.

A locking mechanism according to the present invention can have a wide range of applications. In one of such applications, said two parts (which have to be locked together) belong to a vehicle. For example, said two parts belong to an open roof construction of a vehicle.

The inventions secondly relates to an open roof construction for a vehicle, comprising a roof opening defined in a stationary part of the vehicle and a movable closure means for opening and closing said roof opening, provided with at least one locking mechanism according the present invention, wherein one of said first and second locking members is connected to the stationary part of the vehicle and the other of said first and second locking members is connected to the movable closure means.

When, in a preferred embodiment of such an open roof construction, the movable closure means comprises a number of longitudinally extending panels which are transversally movable between a central stacked position when the roof opening is opened and an adjoining position in which the roof opening is closed, preferably the two panels that are positioned outermost in the closed state of the roof opening each comprise two locking mechanisms positioned at their forward and rearward edges, respectively, in the vicinity of their respective outer longitudinal edge.

Hereinafter the invention will be elucidated referring to the drawing, in which embodiments thereof are illustrated.
Figure 1 shows, in a perspective view, the elements of a first embodiment of a locking mechanism according to the present invention in a disassembled state;
figure 2 shows a frontal view according to II in fig. 1;
figure 3 shows two of the elements illustrated in fig. 1, i.e. the locking pin and drive member, in an assembled state;
figures 4-7 show the locking mechanism according to figure 1 in an assembled state during successive stages of its operation, and
figure 8 shows an example of an open roof construction of a vehicle according to the present invention.

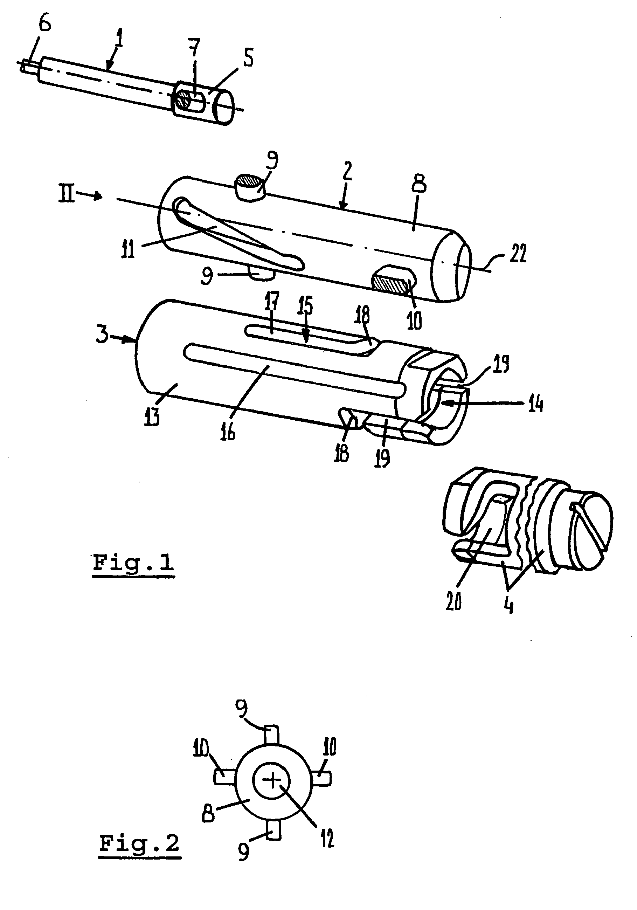

Firstly referring to figure 1, the distinct components of an embodiment of a locking mechanism in accordance with the present invention are illustrated. Basically, the locking mechanism comprises four components; a drive member 1, a first locking member 2, a guide member 3, and a second locking member 4 which will cooperate with the first locking member 2 for locking together two parts.

As will be explained below, the drive member 1, first locking member 2 and guide member 3 define an assembly which is connected to a first one of said parts to be locked together. The second locking member 4 will be connected to a second one of said parts. These parts themselves are not illustrated.

The drive member 1 comprises a drive pin 5 attached to a push and pull cable 6. It is to be noted, however, that a movement of the drive pin 5 also may be realised in any other appropriate manner.

The drive pin 5 comprises two radially extending drive projections 7 (only one of which is visible; the other extends in a diametrically opposite sense).

The first locking member 2 comprises an elongate, substantially cylindrically shaped locking pin 8 with two guide projections 9 extending radially therefrom at diametrically opposed positions. Near to its frontal end the locking pin 8 comprises two locking noses 10 extending radially (again, only one locking nose is visible). Further, the locking pin 8 is provided with two spiral shaped channels 11 (only one of which is visible).

Referring to figure 2, a rearward view according to II in figure 1 of the locking pin 8 is illustrated, showing both guide projections 9 and both locking noses 10. Moreover it is visible, that the locking pin 8 comprises a longitudinally extending bore 12 having a diameter which closely matches the external diameter of the drive pin 5.

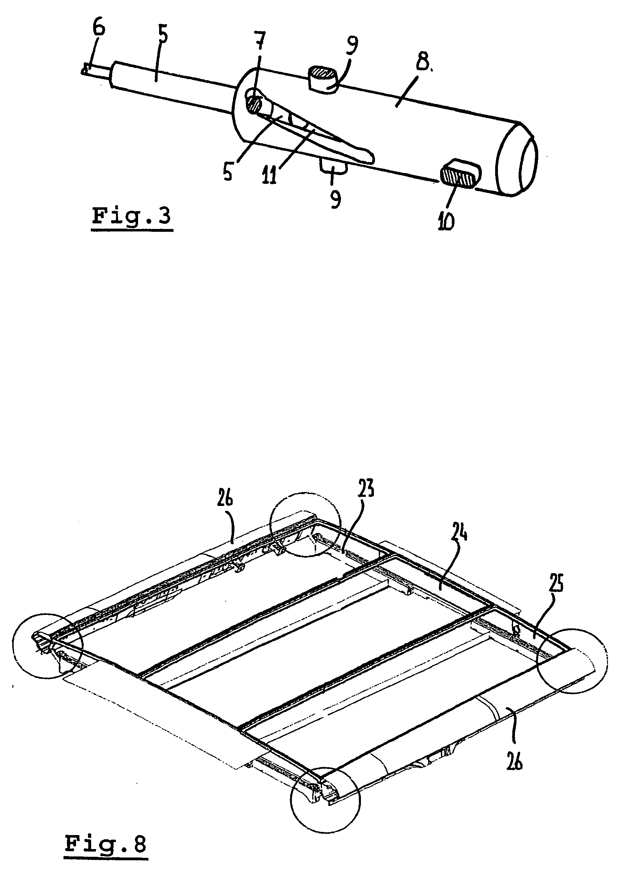

Thus, in the assembled state of the locking mechanism illustrated in figure 1, the drive pin 5 is housed in the bore 12 of the locking pin 8, wherein the drive projections 7 of the drive pin 5 are received in the spiral shaped channels 11 of the locking pin 8. This situation is clearly illustrated in figure 3.

Again referring to figure 1, it is shown that the guide member 3 has a tubular housing 13 with a central, longitudinally extending bore 14. The diameter of the bore 14 closely matches the external diameter of the locking pin 8.

The housing 13 comprises two guide channels 15 (only one of which is entirely visible) and two auxiliary channels 16. It is noted, that only one auxiliary channel 16 is visible, and that the other auxiliary channel 16 is positioned at a diametrically opposite location.

Each channel 15 comprises a first longitudinal section 17 and a connecting transverse section 18. This transverse section 18 may extend perpendicularly to the longitudinal section 17, but this is not necessary. Whereas in figure 1 a first guide channel 15 is almost entirely visible, of the diametrically opposite guide channel 15 only part of the transverse section 18 is visible.

Further, it appears from figure 1, that an end channel 19 connects to each transverse section 18.

In the assembled state of the locking mechanism, the locking pin 8 with drive pin 5 received therein is housed in the bore 14 of the housing 13. The guide projections 9 are received in the guide channels 15, whereas the drive projections 7 of the drive pin 5 project into the auxiliary channels 16 (thus, said drive projections 7 of the drive pin 5 not only are received in the spiral shaped channels 11 of the locking pin 8, but also in said auxiliary channels 16).

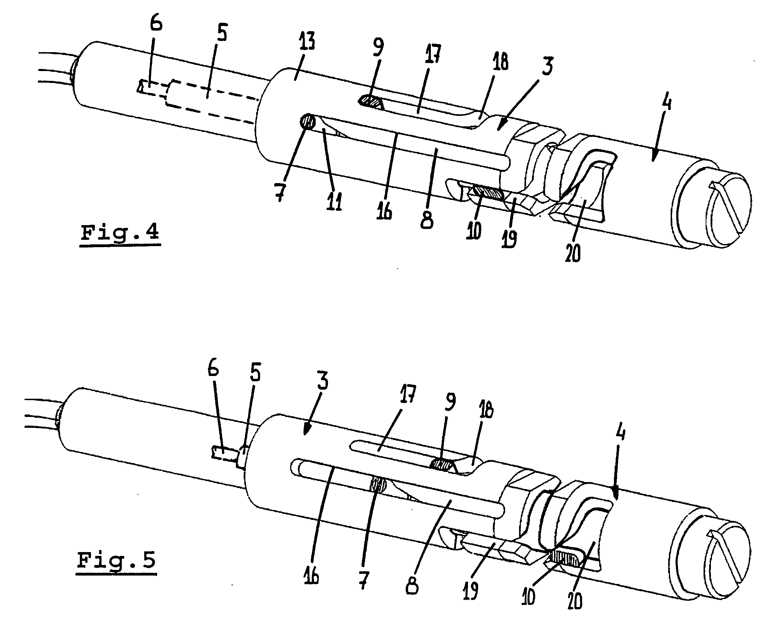

The end channels 19 are meant for receiving the locking noses 10 of the locking pin 8 in a release position of the locking mechanism, as illustrated for example in figure 4 (which will be elucidated below).

Finally, figure 1 illustrates the second locking member 4 which comprises two locking recesses 20 (only one of which is entirely visible) for cooperation with the locking noses 10 of the locking pin 8 in a bayonet like manner.

The operation of the locking mechanism illustrated in figure 1 now will be elucidated while referring to figures 4-7. It is noted that in these figures the drive pin 5 and cable 6 are surrounded by a protecting house.

Figure 4 shows the locking mechanism in its release position. The drive projections 7 of the drive pin 5 are positioned in the rearward end of the spiral shaped channels 11 of the locking pin 8 (i.e. the position as illustrated in figure 3). The locking pin 8 assumes a retracted position within the housing 13 of the guide member 3, such that the guide projections 9 are positioned at the rearward end of the longitudinal sections 17 of the guide channels 15. The locking noses 10 of the locking pin 8 are positioned in the end channels 19 of the guide member 3. Thus, in this release position of the locking mechanism there is no connection with the second locking member 4.

Upon activation of the drive pin 5 by means of the push and pull cable 6, the drive pin 5 is moved to the right, such that the drive projections 7 move along the auxiliary channels 16, thereby entraining the locking pin 8. As a result, the guide projections 9 move in the respective longitudinal sections 17, whereas the locking noses 10 move out of the end channels 19 towards the second locking member 4 (that is, into the locking recesses 20 thereof).

Although the drive projections 7 engage the inclined walls of the spiral shaped channels 11 of the locking pin 8, a rotation of the locking pin 8 will not occur, until the guide projections 9 will have reached the transverse sections 18 of the guide channels 15. A rotation of the drive pin 5 neither will occur, because the drive projections 7 are received in the auxiliary channels 16 of the guide member 3.

Figure 5 shows the locking mechanism between its release position and its locking position.

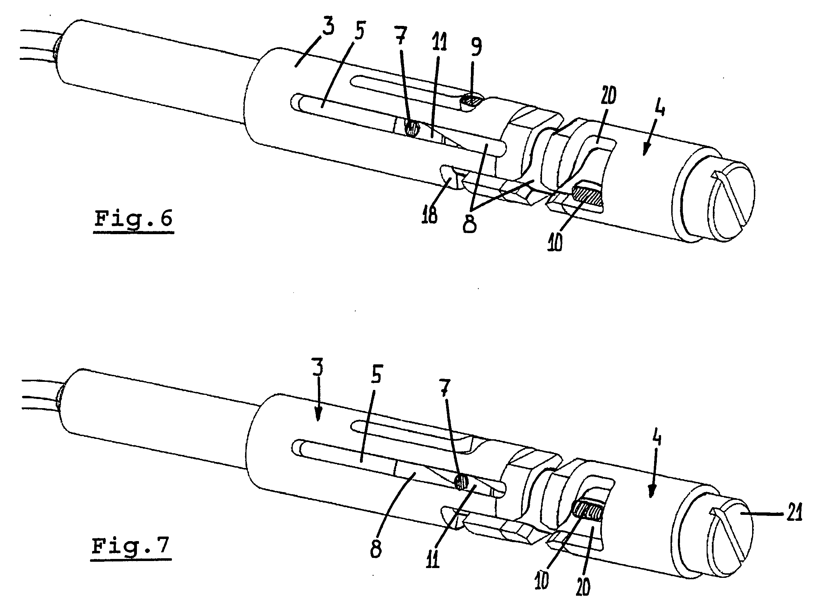

In figure 6 the guide projections 9 of the locking pin 8 have reached the transverse sections 18 of the guide channels 15. Now, as a result of the cooperation between the drive projections 7 of the drive pin 5 and the spiral shaped channels 11 of the locking pin 8 a rotation of the locking pin 8 around its longitudinal axis 22 (see figure 1) can occur.

It is noted, that the locking noses 10 have moved into the locking recesses 20 of the second locking member 4 sufficiently to enable a rotation of the locking pin 8 relative to said second locking member 4.

Figure 7 shows the locking mechanism in a position shortly before reaching its extreme locking position. As a result of the cooperation between the drive projections 7 and spiral shaped channels 11 the locking pin 8 already has been rotated in a certain amount, such that the locking noses 10 lockingly engage the locking recesses 20 of the second locking member 4.

The locking operation of the locking mechanism will be completed, when the locking noses 10 have reached their end position in the locking recesses 20 (not illustrated). Such an end position may be determined by a contact between the locking noses 10 and an end of the locking recesses 20, but also may be determined by the moment a locking force reaches a certain limit. Such a limit may be set by a setting member 21.

When again unlocking the locking mechanism, the drive pin 5 is moved in an opposite sense (to the left) such as firstly to cause a rotation of the locking pin 8, followed by a translational movement of the locking pin 8.

Finally reference is made to fig. 8, which shows part of an open roof construction for a vehicle, meant for opening and closing a roof opening (not illustrated) defined in a stationary part of the vehicle. In the illustrated embodiment the open roof construction comprises a movable closure means defined by a number of longitudinally extending panels 23, 24 and 25 which are transversally moveable between a central stacked position when the roof opening is opened and a adjoining position in which the roof opening is closed (illustrated). The two panels 23 and 25 positioned outermost in the closed state of the roof opening each comprise two locking mechanisms at the positions indicated by circles, i.e. at their forward and rearward edges, respectively, in the vicinity of their respective outer longitudinal edge 26. The locking mechanisms themselves have not been illustrated in figure 8.

The invention is not limited to the embodiments described before, which may be varied widely within the scope of the invention as defined by the appending claims.

## Claims

1. Locking mechanism for locking together two parts, comprising a first movable locking member (2) connected to a first one of said parts and a second locking member (4) connected to a second one of said parts, wherein the first locking member is movable between a release position in which it disengages the second locking member and a locking position in which it lockingly engages the second locking member, wherein the first locking member comprises an elongate, substantially cylindrically shaped lock-ing pin (8) which can translate in its longitudinal direction and which can rotate around its longitudinal axis, **characterized in that** said locking pin (8) is housed in a tubular guide member (3) for defining the translational and rotational movements of the locking pin, and wherein the locking pin is operatively connected to a drive member (1) for in combination with the guide member (3) causing the movements of the locking pin relative to the guide member and thus relative to the second locking member.

2. Locking mechanism according to claim 1, wherein the guide member (3) comprises at least one guide channel (15) with a first longitudinal section (17) and a connecting transverse section (18), whereas the locking pin (8) comprises a corresponding guide projection (9) projecting into said guide channel.

3. Locking mechanism according to claim 2, wherein the guide member (3) comprises two guide channels (15) positioned one diametrically opposite the other, whereas the locking pin (8) correspondingly comprises two guide projections (9) positioned one diametrically opposite the other.

4. Locking mechanism according to claim 2 or 3, wherein the drive member (1) comprises a drive pin (5) movable in the longitudinal direction of the locking pin (8), with at least one drive projection (7) that engages the locking pin.

5. Locking mechanism according to claim 4, wherein the locking pin (8) comprises a longitudinally extending bore (12) for at least partially housing the drive member (1).

6. Locking mechanism according to claim 5, wherein the locking pin (8) comprises at least one spiral shaped channel (11) into which the drive projection (7) of the drive pin (1) extends and wherein means are provided for preventing a rotation of the drive pin (5) relative to the guide member (3).

7. Locking mechanism according to claim 6, wherein the means for preventing a rotation of the drive pin (5) relative to the guide member (3) comprises a longitudinally extending auxiliary channel (16) provided in the guide member into which said drive projection (7) of the drive pin extends.

8. Locking mechanism according to claim 7, wherein the locking pin (8) comprises two spiral shaped channels (11), the drive pin (5) comprises two drive projections (7) and the guide member (3) comprises two auxiliary channels (16), each positioned one diametrically opposite the other.

9. Locking mechanism according to any of the previous claims, wherein the locking pin (8) is provided with at least one locking nose (10) for cooperation with a locking recess (20) of the second locking member (4).

10. Locking mechanism according to claim 9, wherein said locking nose (10) and locking recess (20) together define a locking assembly of the bayonet type.

11. Locking mechanism according to claim 9 or 10, wherein the locking pin (8) comprises two locking noses (10) and the second locking member (4) comprises two locking recesses (20) each positioned one diametrically opposite the other.

12. Locking mechanism according to any of the previous types, wherein said two parts belong to a vehicle.

13. Locking mechanism according to claim 12, wherein said two parts belong to an open roof construction of a vehicle.

14. Open roof construction for a vehicle, comprising a roof opening defined in a stationary part of the vehicle and a movable closure means (23-25) for opening and closing said roof opening, provided with at least one locking mechanism according any of the previous claims, wherein one of said first (2) and second (4) locking members is connected to the stationary part of the vehicle and the other of said first and second locking members is connected to the movable closure means (23-25).

15. Open roof construction according to claim 14, wherein the movable closure means comprises a number of longitudinally extending panels (23-25) which are transversally movable between a central stacked position when the roof opening is opened and an adjoining position in which the roof opening is closed, and wherein the two panels (23, 25) that are positioned outermost in the closed state of the roof opening each comprise two locking mechanisms positioned at their forward and rearward edges, respectively, in the vicinity of their respective outer longitudinal edge (26).

## Patentansprüche

1. Verriegelungsmechanismus zum miteinander Verriegeln von zwei Teilen, welcher ein erstes bewegbares Verriegelungselement (2), das mit dem ersten der zwei Teile verbunden ist, und ein zweites Verriegelungselement (4) aufweist, das mit dem zweiten der zwei Teile verbunden ist, wobei das erste Verriegelungselement zwischen einer Freigabeposition, in welcher es außer Eingriff von dem zweiten Verriegelungselement ist, und einer Verriegelungsposition bewegbar ist, in welcher es verriegelnd im Eingriff mit dem zweiten Verriegelungselement ist, wobei das erste Verriegelungselement einen länglichen, im Wesentlichen zylindrischen Verriegelungsstift (8) aufweist, der sich in Längsrichtung bewegen kann und der sich um seine Längsachse drehen kann, **dadurch gekennzeichnet, dass** der Verriegelungsstift (8) in einem röhrenförmigen Führungselement (3) untergebracht ist zum Definieren der Bewegungen des Verriegelungsstifts in Längsrichtung und um seine Längsachse, wobei der Verriegelungsstift mit einem Antriebselement (1) betätigbar verbunden ist, welches zusammen mit dem Führungselement (3) die Bewegungen des Verriegelungsstifts relativ zu dem Führungselement und damit relativ zu dem zweiten Verriegelungselement verursacht.

2. Verriegelungsmechanismus gemäß Anspruch 1, wobei das Führungselement (3) zumindest einen Führungskanal (15) mit einem ersten Längsabschnitt (17) und einem mit diesem verbundenen Querabschnitt (18) aufweist und der Verriegelungsstift (8) eine korrespondierende Führungsauskragung (9) aufweist, die in den Führungskanal hineinragt.

3. Verriegelungsmechanismus gemäß Anspruch 2, wobei das Führungselement (3) zwei Führungskanäle (15) aufweist, die zueinander diametral gegenüberliegend positioniert sind, und der Verriegelungsstift (8) korrespondierend zwei Führungsauskragungen (9) aufweist, die zueinander diametral gegenüberliegend positioniert sind.

4. Verriegelungsmechanismus gemäß Anspruch 2 oder 3, wobei das Antriebselement (1) einen Antriebsstift (5), der in Längsrichtung des Verriegelungsstifts (8) bewegbar ist, mit zumindest einer Antriebsauskragung (7) aufweist, die im Eingriff mit dem Verriegelungsstift ist.

5. Verriegelungsmechanismus gemäß Anspruch 4, wobei der Verriegelungsstift (8) ein sich längs erstreckende Bohrung (12) aufweist, um das Antriebselement (1) zumindest teilweise aufzunehmen.

6. Verriegelungsmechanismus gemäß Anspruch 5, wobei der Verriegelungsstift (8) zumindest einen spiralförmigen Kanal (11) aufweist, in den sich die Antriebsauskragung (7) des Antriebsstifts (1) erstreckt, und wobei ein Mittel zum Verhindern einer Rotation des Antriebsstifts (5) relativ zu dem Führungselement (3) vorgesehen ist.

7. Verriegelungsmechanismus gemäß Anspruch 6, wobei das Mittel zum Verhindern einer Rotation des Antriebselements (5) relativ zu dem Führungselement (3) einen sich längs erstreckenden Nebenkanal (16) aufweist, der in dem Führungselement vorgesehen ist und in den sich die Antriebsauskragung (7) des Antriebsstifts erstreckt.

8. Verriegelungsmechanismus gemäß Anspruch 7, wobei der Verriegelungsstift (8) zwei spiralförmige Kanäle (11) aufweist, der Antriebsstift (5) zwei Antriebsauskragungen (7) aufweist und das Führungselement (3) zwei Nebenkanäle (16) aufweist, die jeweils einander diametral gegenüberliegend positioniert sind.

9. Verriegelungsmechanismus gemäß einem der vorangegangenen Ansprüche, wobei der Verriegelungsstift (8) mit zumindest einer Verriegelungsnase (10) zum Zusammenwirken mit einer Verriegelungsaussparung (20) des zweiten Verriegelungselements (4) versehen ist.

10. Verriegelungsmechanismus gemäß Anspruch 9, wobei die Verriegelungsnase (10) und die Verriegelungsaussparung (20) zusammen eine Verriegelungsanordnung des Bajonett-Typs bilden.

11. Verriegelungsmechanismus gemäß Anspruch 9 oder 10, wobei der Verriegelungsstift (8) zwei Verriegelungsnasen (10) aufweist und das zweite Verriegelungselement (4) zwei Verriegelungsaussparungen (20) aufweist, die jeweils einander diametral gegenüberliegend positioniert sind.

12. Verriegelungsmechanismus gemäß einem der vorangegangenen Ansprüche, wobei die zwei Teile zu einem Fahrzeug gehören.

13. Verriegelungsmechanismus gemäß Anspruch 12, wobei die zwei Teile zu einer Konstruktion eines offenen Dachs eines Fahrzeugs gehören.

14. Konstruktion eines offenen Dachs für ein Fahrzeug, die eine Dachöffnung, die in einem unbeweglichen Teil des Fahrzeugs ausgebildet ist, und bewegbare Verschlussmittel (23-25) zum Öffnen und Schließen der Dachöffnung aufweist, die mit zumindest einem Verriegelungsmechanismus gemäß einem der vorangegangenen Ansprüche ausgestattet sind, wobei das eine von dem ersten (3) und dem zweiten (4) Verriegelungselement mit dem unbeweglichen Teil des Fahrzeugs verbunden ist und das andere von dem ersten und dem zweiten Verriegelungselement mit den bewegbaren Verschlussmitteln (23-25) verbunden ist.

15. Konstruktion eines offenen Dachs gemäß Anspruch 14, wobei die bewegbaren Verschlussmittel eine Anzahl von sich längs erstreckenden Paneelen (23-25) aufweist, welche quer zwischen einer zentralen zusammen geschobenen Position, in der die Dachöffnung geöffnet ist, und einer aneinandergrenzenden Position bewegbar sind, in der die Dachöffnung geschlossen ist, wobei die zwei Paneele, die im geschlossenen Zustand der Dachöffnung am weitesten außen angeordnet sind, jeweils zwei Verriegelungsmechanismen aufweisen, die jeweils an dem vorderen und hinteren Rand benachbart zu dem jeweiligen äußeren Längs-Rand (26) positioniert sind.

## Revendications

1. Mécanisme de verrouillage pour verrouiller ensemble deux parties, comprenant un premier élément mobile de verrouillage (2) relié à une première desdites parties et un deuxième élément de verrouillage (4) relié à une deuxième desdites parties, dans lequel le premier élément de verrouillage est mobile entre une position de déverrouillage dans laquelle il se dégage du deuxième élément de verrouillage et une position de verrouillage dans laquelle il s'accouple avec le deuxième élément de verrouillage et le verrouille, le premier élément de verrouillage comprenant une goupille d'arrêt (8) allongée de forme sensiblement cylindrique qui peut effectuer une translation dans son sens longitudinal et qui peut tourner autour de son axe longitudinal, **caractérisé en ce que** ladite goupille d'arrêt (8) est logée dans un élément tubulaire de guidage (3) de manière à définir les mouvements de translation et de rotation de la goupille d'arrêt, et dans lequel la goupille d'arrêt est raccordée de manière opérationnelle à un élément d'entraînement (1) de façon à, en combinaison avec l'élément de guidage (3), provoquer les mouvements de la goupille d'arrêt par rapport à l'élément de guidage et donc par rapport au deuxième élément de verrouillage.

2. Mécanisme de verrouillage selon la revendication 1, dans lequel l'élément de guidage (3) comprend au moins un canal de guidage (15) comportant une première section longitudinale (17) et une section transversale de jonction (18), tandis que la goupille d'arrêt (8) comprend une saillie correspondante de guidage (9) avançant dans ledit canal de guidage.

3. Mécanisme de verrouillage selon la revendication 2, dans lequel l'élément de guidage (3) comprend deux canaux de guidage (15) positionnés à l'opposé diamétralement l'un de l'autre, tandis que la goupille d'arrêt (8) comprend de manière correspondante deux saillies de guidage (9) positionnées à l'opposé diamétralement l'une de l'autre.

4. Mécanisme de verrouillage selon la revendication 2 ou 3, dans lequel l'élément d'entraînement (1) comprend un ergot d'entraînement (5) mobile dans le sens longitudinal de la goupille d'arrêt (8), avec au moins une saillie d'entraînement (7) qui coopère avec la goupille d'arrêt.

5. Mécanisme de verrouillage selon la revendication 4, dans lequel la goupille d'arrêt (8) comprend un alésage (12) s'étendant longitudinalement destiné à recevoir au moins en partie l'élément d'entraînement (1).

6. Mécanisme de verrouillage selon la revendication 5, dans lequel la goupille d'arrêt (8) comprend au moins un canal en spirale (11) dans lequel s'étend la saillie d'entraînement (7) de l'ergot d'entraînement (5) et dans lequel un moyen est placé pour empêcher une rotation de l'ergot d'entraînement (5) par rapport à l'élément de guidage (3).

7. Mécanisme de verrouillage selon la revendication 6, dans lequel le moyen pour empêcher une rotation de l'ergot d'entraînement (5) par rapport à l'élément de guidage (3) comprend un canal auxiliaire (16) s'étendant longitudinalement placé dans l'élément de guidage dans lequel s'étend ladite saillie d'entraînement (7) de l'ergot d'entraînement.

8. Mécanisme de verrouillage selon la revendication 7, dans lequel la goupille d'arrêt (8) comprend deux canaux en spirale (11), l'ergot d'entraînement (5) comprend deux saillies d'entraînement (7) et l'élément de guidage (3) comprend deux canaux auxiliaires (16), positionnés chacun à l'opposé diamétralement l'un de l'autre.

9. Mécanisme de verrouillage selon l'une quelconque des revendications précédentes, dans lequel la goupille d'arrêt (8) est munie d'au moins un nez d'arrêt (10) destiné à coopérer avec un évidement d'arrêt (20) du deuxième élément de verrouillage (4).

10. Mécanisme de verrouillage selon la revendication 9, dans lequel le nez d'arrêt (10) et l'évidement d'arrêt (20) définissent ensemble un ensemble de verrouillage à baïonnette.

11. Mécanisme de verrouillage selon la revendication 9 ou 10, dans lequel la goupille d'arrêt (8) comprend deux nez d'arrêt (10) et le deuxième élément de verrouillage (4) comprend deux évidements d'arrêt (20) positionnés chacun à l'opposé diamétralement l'un de l'autre.

12. Mécanisme de verrouillage selon l'une quelconque des revendications précédentes, dans lequel lesdites deux parties appartiennent à un véhicule.

13. Mécanisme de verrouillage selon la revendication 12, dans lequel lesdites deux parties appartiennent à une structure de toit ouvrant d'un véhicule.

14. Structure de toit ouvrant pour un véhicule, comportant une ouverture de toit définie dans une partie fixe du véhicule et un moyen mobile de fermeture (23-25) pour ouvrir et fermer ladite ouverture de toit, munie d'au moins un mécanisme de verrouillage selon l'une quelconque des revendications précédentes, dans lequel l'un desdits premier (2) et deuxième (4) éléments de verrouillage est relié à la partie fixe du véhicule et l'autre desdits premier et deuxième éléments de verrouillage est relié au moyen mobile de fermeture (23-25).

15. Structure de toit ouvrant selon la revendication 14, dans laquelle le moyen mobile de fermeture comprend un certain nombre de panneaux (23-25) s'étendant longitudinalement qui peuvent être déplacés transversalement entre une position empilée centrale lorsque l'ouverture de toit est ouverte et une position adjacente dans laquelle l'ouverture de toit est fermée, et dans laquelle les deux panneaux (23-25) qui se trouvent le plus à l'extérieur dans l'état fermée de l'ouverture de toit comprennent chacun deux mécanismes de verrouillage placés respectivement sur leurs bords avant et arrière, à proximité de leur bord longitudinal extérieur (26) respectif.
